(19) Europäisches Patentamt
European Patent Office
Office européen des brevets

(11) **EP 4 160 489 A1**

(12) **EUROPEAN PATENT APPLICATION**

(43) Date of publication:
**05.04.2023 Bulletin 2023/14**

(21) Application number: **22174822.1**

(22) Date of filing: **23.05.2022**

(51) International Patent Classification (IPC):
***G06N 5/00*** (2006.01)     ***G06N 7/00*** (2006.01)
***G06N 3/04*** (2006.01)

(52) Cooperative Patent Classification (CPC):
**G06N 5/01; G06N 7/01; G06N 3/044; G06N 3/047**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.09.2021   JP 2021159484**

(71) Applicant: **FUJITSU LIMITED
Kawasaki-shi, Kanagawa 211-8588 (JP)**

(72) Inventor: **Yin, Fang
Kawasaki-shi, Kanagawa 211-8588 (JP)**

(74) Representative: **Hoffmann Eitle
Patent- und Rechtsanwälte PartmbB
Arabellastraße 30
81925 München (DE)**

(54)   **OPTIMIZATION PROGRAM, OPTIMIZATION METHOD, AND OPTIMIZATION APPARATUS**

(57)   An optimization apparatus of: performing a search for an optimal solution through iteration of processing configured to determine, by using a difference between a first energy value of an evaluation function in a first state and a second energy value of the evaluation function in a second state, whether to accept a state transition from the first state to the second state, and perform the state transition; and in the performing of the search for the state, storing the difference between the first and second energy values, and the respective values of the evaluation function in the second state, in a case where negation of the state transition is consecutively iterated a specific number of times, selecting one state from among the stored second states, based on the differences, and making the state transition from the first state to the selected one state.

FIG. 1

EP 4 160 489 A1

**Description**

FIELD

The embodiment discussed herein is related to an optimization program, an optimization method, and an optimization apparatus.

BACKGROUND

A combinatorial optimization problem is used in fields such as manufacturing, finance, and logistics. The combinatorial optimization problem is an optimization problem of which a solution has a combinatorial structure such as an order or an assignment.

As a method of solving a large-scale multivariate optimization problem, there is an optimization apparatus (may also be referred to as an Ising machine or a Boltzmann machine) that uses an Ising-type energy function. The optimization apparatus performs a calculation by replacing a problem subjected to the calculation with an Ising model that is a model representing a behavior of a spin of a magnetic material.

For example, by using a stochastic search method such as simulated annealing, the optimization apparatus obtains, as an optimum solution, a combination of values of respective bits with which a minimum value of a value (referred to as an energy) of the aforementioned Ising-type energy function is obtained. The simulated annealing method is a type of Monte Carlo methods and is a method of stochastically obtaining a solution by using a random number value. Description will be given below by using, as an example, a problem of minimizing a value of an energy function to be optimized. In a case of maximization, the sign of the energy function may be changed. The energy function may also be called as an evaluation function, a cost function, or an objective function.

The Ising model is a model that represents a system of n spins that interact with each other. Each spin (corresponding to a state variable) $x_i$ takes a binary value of +1 or -1. An energy $E(x)$ of the entire system is represented by Equation (1) below. Equation (1) is an example of an evaluation function.

$$E(x) = -\sum_{\langle i,j \rangle} W_{ij}\, x_i x_j - \sum_i b_i\, x_i \qquad \cdots (1)$$

In Equation (1), $W_{ij}$ denotes an interaction coefficient between a spin $x_i$ and a spin $x_j$, and bi denotes an external magnetic field coefficient that is a bias value for the entire system. $W_{ij}$ and bi are constants determined in accordance with a problem to be solved.

A candidate for a state transition from a current state to a next state is of inversion of one spin, and there are n candidates. Thus, one spin number or a set of a plurality of spin numbers to be inverted may be generated as a transition candidate.

An energy change $\Delta E_i$ caused by inversion of an i-th spin is represented by Equation (2) below.

$$\Delta E_i = E_{(x)}\big|_{xi \to x'_i} E_{(x)}$$

$$= -\delta x_i \left( \sum_j W_{ij}\, x_j + b_i \right) \qquad \cdots (2)$$

A value in parentheses in Equation (2) is a value of a local field (total input) of a bit i and represents a rate of the energy change caused by inversion of each spin. In Equation (2), if $\delta x_i$ that is an output change and the sign of a local field of the bit i coincide with each other, the energy decreases. In the simulated annealing, the minimum value (or the maximum value) of the energy E is searched for by iterating determination as to whether to make a state transition in accordance with an increase or decrease in $\Delta E_i$.

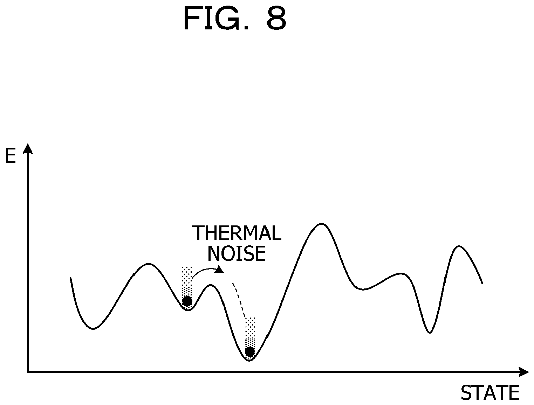

As the related art for searching for the minimum value (or the maximum value) of the energy E, there are Markov Chain Monte Carlo (MCMC) methods. FIG. 8 is a diagram for describing the MCMC. In FIG. 8, a vertical axis corresponds to a value of energy, and a horizontal axis corresponds to a certain state.

In the MCMC, an amount of energy change $\Delta E$ in a case where the state moves from the current state to a neighboring state is calculated. If the calculated amount of energy change $\Delta E$ satisfies a condition, the state transitions to the next state. $\Delta E$ is calculated by subtracting an energy E' after the transition from an energy E before the transition.

In the MCMC, a search is performed by stochastically inverting a state (bit). Thermal noise is applied, so that the search does not stay at a local solution.

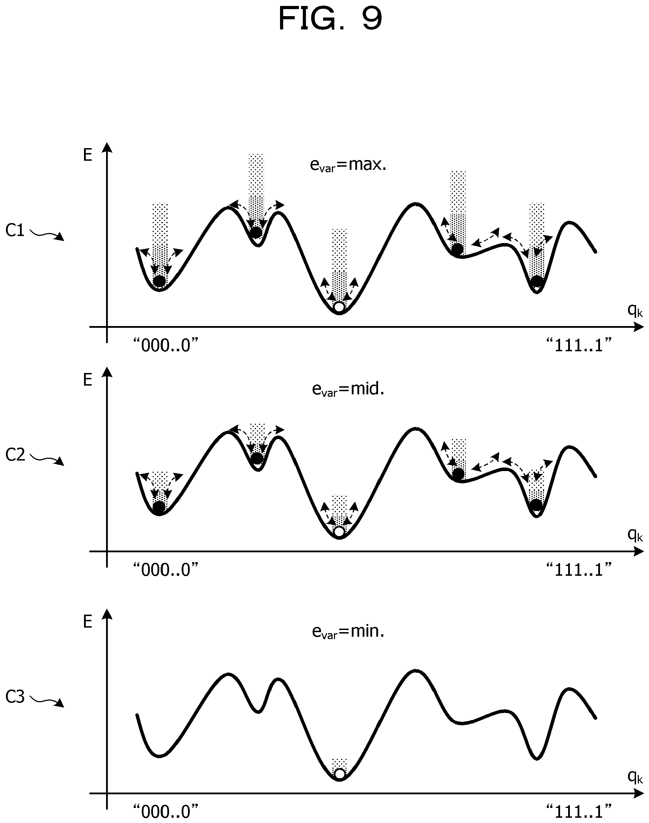

FIG. 9 is a diagram for describing simulated annealing. Graphs of cases C1 to C3 in FIG. 9 illustrate the energy E of the entire system. For example, a vertical axis corresponds to the value of the energy E of the entire system, and a horizontal axis corresponds to each of states from a state in which all bits are 0 $(000 \cdots 0)$ to a state in which all the bits are 1 $(111 \cdots 1)$.

The case C1 indicates a graph obtained when a width of the applied thermal noise is large ($e_{var}$ = max.). The case C2 indicates a graph obtained when the width of the thermal noise is medium ($e_{var}$ = mid.). The case C3 indicates a graph obtained when the width of the thermal noise is small ($e_{var}$ = min.). In the graphs, a white dot indicates a minimum value (optimum solution) of the energy E, and a black dot indicates a local solution (minimum value in the neighborhood).

In a steepest descent method or the like, at the time of a search for the minimum value of the energy E, once the search gets stuck in a local solution, the search is usually unable to escape therefrom. By contrast, in simulated annealing, application of thermal noise enables movement in a direction in which the energy increases to some extent (gray portions in the figure). In simulated annealing, the width of the thermal noise is reduced gradually from the case C1 to the case C3. Consequently, in simulated annealing, the search that has gotten stuck in the optimum solution is unable to escape therefrom (but is able to escape from a local solution) and finally converges to the optimum solution.

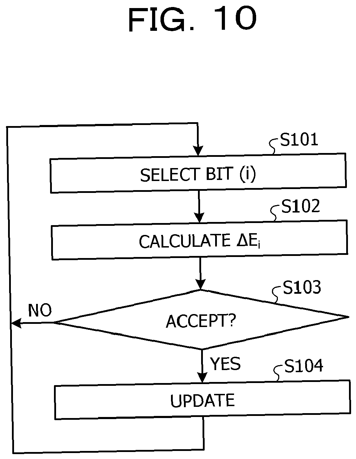

FIG. 10 is a flowchart for describing simulated annealing processing of the related art. In the simulated annealing processing of the related art, the search finally converges to the optimum solution by iterating the processing illustrated in FIG. 10.

For example, as illustrated in FIG. 10, in the simulated annealing processing of the related art, a bit (i) is randomly or sequentially selected (S101). Then, in the simulated annealing processing of the related art, an energy increase ($\Delta E_i$) at the time of inversion of the selected bit is calculated as indicated by Equation (2) (S102).

Then, in the simulated annealing processing of the related art, an acceptance probability ($A(\Delta E_i)$) of the state transition is calculated based on the energy increase ($\Delta E_i$) (S102). The acceptance probability of the state transition is calculated using Equation of $A(\Delta E_i) = min(1, exp(-\Delta E_i/T))$ (where, T denotes a temperature corresponding to the thermal noise).

Then, in the simulated annealing processing of the related art, based on the calculated acceptance probability ($A(\Delta E_i)$) of the state transition, it is determined whether to accept the state transition by using a uniform random number $(0 < u[i] < 1)$ (S103). In this determination, if $u[i] < (A(\Delta E_i))$ (S103: Yes), the bit is inverted and updated (S104: the state transition is accepted). The processing then returns to S101. If $u[i] < (A(\Delta E_i))$ is not satisfied (S103: No), the bit is not inverted and the state is maintained (the state transition is not accepted). The processing then returns to S101.

Japanese Laid-open Patent Publication No. 10-293756, Japanese Laid-open Patent Publication No. 9-34951, Japanese Laid-open Patent Publication No. 6-19507, and Japanese Laid-open Patent Publication No. 2020-79991 are disclosed as related art.

SUMMARY

TECHNICLA PROBLEM

However, in the related art described above, when the state transition is consecutively rejected in the determination as to whether to accept the state transition at the time of the search for the optimum solution, the state change does not occur, so that the time in which the search stays at the local solution increases. Consequently, the processing time for obtaining the optimum solution increases. For example, in a case of local optimization or low thermal noise, a state change does not occur and the search stays at a local solution for a long time. This causes an issue in that the efficiency for the search for the optimum solution decreases.

In one aspect, an object is to provide a computer-readable recording medium storing an optimization program, an optimization method, and an optimization apparatus capable of efficiently performing a search for a solution.

SOLUTION TO PROBLEM

According to an aspect of the embodiments, there is provided an optimization program comprising instructions which, when executed by a computer, cause the computer to execute optimization processing. In an example, the optimization processing includes: performing a search for a state that serves as a solution through iteration of processing, the processing being configured to determine, by using a difference between a first energy value of an evaluation function based on respective values of a plurality of variables that indicate a first state and a second energy value of the evaluation function based on respective values of the plurality of variables that indicate a second state in which a value of at least one variable among the plurality of variables is changed, whether to accept a state transition from the first state to the second state, and perform the state transition based on a result of the determining; and in the performing of the search for the state, storing the difference between the first energy value in the first state and the second energy value in the second state, and the respective values of the plurality of variables that indicate the second state; in a case where negation of the state transition is consecutively iterated a specific number of times, selecting one state from among the stored second states, based on the differences, and making the state transition from the first state to the selected one state.

ADVANTAGEOUS EFFECTS OF INVENTION

A search for a solution may be efficiently performed.

BRIEF DESCRIPTION OF DRAWINGS

FIG. 1 is a block diagram illustrating an example of a functional configuration of an optimization apparatus according to an embodiment;
FIG. 2 is a flowchart illustrating an example of an operation of the optimization apparatus according to the embodiment;
FIG. 3 is a flowchart illustrating an example of setting processing;
FIG. 4 is an explanatory diagram for describing selection of a state that serves as a transition destination;
FIG. 5 is an explanatory diagram for describing selection of a state that serves as the transition destination;
FIG. 6 is an explanatory diagram for describing selection of a state that serves as the transition destination;
FIG. 7 is an explanatory diagram illustrating an example of a configuration of a computer;
FIG. 8 is a diagram for describing MCMC;
FIG. 9 is a diagram for describing simulated annealing; and
FIG. 10 is a flowchart for describing simulated annealing processing of the related art.

DESCRIPTION OF EMBODIMENTS

An optimization program, an optimization method, and an optimization apparatus according to embodiments will be described below with reference to the drawings. In the embodiments, components having the same functions are denoted by the same reference sign, and redundant description thereof is omitted. The optimization program, the optimization method, and the optimization apparatus described in the embodiments below are merely illustrative and do not intend to limit the embodiments. The individual embodiments below may be appropriately combined with each other within a scope without any contradiction.

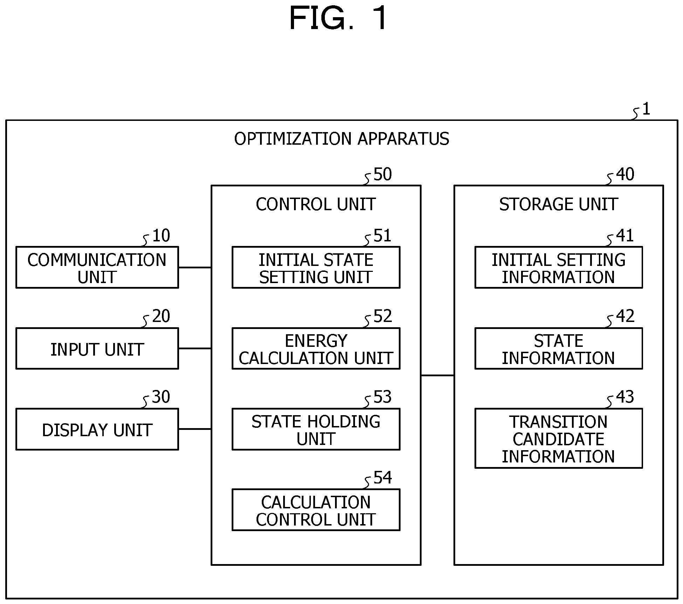

FIG. 1 is a block diagram illustrating an example of a functional configuration of an optimization apparatus according to an embodiment. As illustrated in FIG. 1, an optimization apparatus 1 includes a communication unit 10, an input unit 20, a display unit 30, a storage unit 40, and a control unit 50. As the optimization apparatus 1, for example, a personal computer (PC) or the like may be used.

The communication unit 10 receives various kinds of data from an external apparatus via a network. The communication unit 10 is an example of a communication device. For example, the communication unit 10 may receive, from the external apparatus, information that is part or entirety of initial setting information 41 (described later).

The input unit 20 is an input device that inputs various kinds of information to the control unit 50 of the optimization apparatus 1. The input unit 20 corresponds to a keyboard, a mouse, a touch panel, or the like. For example, the input unit 20 receives the information that is the part or entirety of the initial setting information 41 (described later) through an input operation performed by a user.

The display unit 30 is a display device that displays information output from the control unit 50. For example, the display unit 30 displays a processing result or the like obtained in the optimization apparatus 1.

The storage unit 40 stores the initial setting information 41, state information 42, and transition candidate information 43. The storage unit 40 corresponds to a semiconductor memory element such as a random-access memory (RAM) or a flash memory, or a storage device such as a hard disk drive (HDD).

The initial setting information 41 is information on initial settings used when an optimum solution of an Ising-type energy function corresponding to an optimization problem is obtained through simulated annealing processing. For example, the initial setting information 41 includes information (such as constants $W_{ij}$ and bi determined in accordance with a problem to be solved) of a model equation of the Ising-type energy function (evaluation function) corresponding to the optimization problem.

The initial setting information 41 also includes an initial temperature of thermal noise, the number of iterations (N), a threshold (M) of the number of consecutive rejections, an initial value (j = 0) of a counter (j) for counting the number of consecutive rejections, and the number of candidate states (K) that are used in the simulated annealing processing. The number of consecutive rejections indicates the number of consecutive iterations in which a state transition is not accepted but is rejected in the simulated annealing processing. The initial setting information 41 includes a threshold (TH) for determining a candidate state that serves a candidate for a transition destination.

The state information 42 is information indicating a state (value of each variable (spin)) or the like of the Ising-type energy function used when the optimum solution of the energy function is obtained through the simulated annealing processing. For example, the state information 42 includes information on (value of each variable (spin) of) each of a predetermined number of (for example, M) states ($S_i$) that are set as candidates for the transition destination in the simulated annealing processing, and an energy increase ($\Delta E_i$) from an energy before the transition to an energy in each state.

The transition candidate information 43 is information on candidate states that are set as candidates for the next transition destination when rejection of the state transition is iterated without being accepted in the simulated annealing processing. For example, the transition candidate information 43 includes the value of each variable (spin) indicating the candidate state and the energy increase from the energy before the transition to the energy in that candidate state.

The control unit 50 includes an initial state setting unit 51, an energy calculation unit 52, a state holding unit 53, and a calculation control unit 54. The control unit 50 is implemented by a central processing unit (CPU), a graphics processing unit (GPU), or a hard wired logic such as application-specific integrated circuit (ASIC) or a field-programmable gate array (FPGA).

The initial state setting unit 51 is a processing unit that sets an initial state used when the optimum solution of the Ising-type energy function corresponding to the optimization problem is obtained through the simulated annealing processing.

For example, the initial state setting unit 51 receives information on the initial state via the communication unit 10 or the input unit 20. For example, the information on the initial state includes the information on the model equation of the Ising-type energy function (evaluation function) corresponding to the optimization problem, the initial temperature of thermal noise, the number of iterations (N), the threshold (M) of the number of consecutive rejections, and the initial value of the counter (j) for counting the number of consecutive rejections. The information on the initial state also includes the number of candidate states (K) that are set as candidates for the transition destination, and the threshold (TH) for determining the candidate state. The initial state setting unit 51 stores the received information on the initial state in the storage unit 40 as the initial setting information 41.

The energy calculation unit 52 is a processing unit that performs a calculation related to an energy value of the Ising-type energy function (evaluation function) in the simulated annealing processing. For example, based on Equation (1) described above, the energy calculation unit 52 calculates the energy value related to the energy E(x) of the entire system. Based on Equation (2) described above, the energy calculation unit 52 calculates the energy increase ($\Delta E_i$) from an energy in the current state to an energy in a state ($S_i$) in which a value of at least one variable among the variables (bits) is changed.

The state holding unit 53 is a processing unit that stores, in the storage unit 40, information on each state in which a value of each variable (each bit) is changed in the simulated annealing processing. For example, the state holding unit 53 stores, in the storage unit 40 as the state information 42, the energy increase ($\Delta E_i$) from the energy in the current state to the energy in the state ($S_i$) in which a value of at least one variable among the variables (bits) is changed, which is calculated by the energy calculation unit 52 in the simulated annealing processing, and the value of each variable indicating that state ($S_i$).

If the energy difference ($\Delta E_i$) is smaller than a specific value (threshold (TH)), the state holding unit 53 stores the energy difference and the value of each variable indicating the corresponding state (candidate state) in the storage unit 40 as the transition candidate information 43.

The calculation control unit 54 is a processing unit that controls calculation processing (simulated annealing processing) for obtaining the optimum solution. For example, in the simulated annealing processing, the calculation control unit 54 determines whether to accept the state transition, based on the difference ($\Delta E_i$) between the energy value of the current state (value of each variable) and the energy value of the state ($S_i$) changed from the current state by bit inversion, calculated by the energy calculation unit 52. By iterating this processing, the calculation control unit 54 searches for a state that serves as the solution.

In a case where negation of the state transition is consecutively iterated a specific number of times when the search for the solution is iteratively performed in such a manner, the calculation control unit 54 selects one state based on the energy difference from among the states included in the stored state information 42. Then, the calculation control unit 54 causes the state to transition from the current state to the selected one state. Thus, the optimization apparatus 1 may avoid a circumstance in which a state change does not occur and the search stays at a local solution for a long time because of consecutive negation of the state transition.

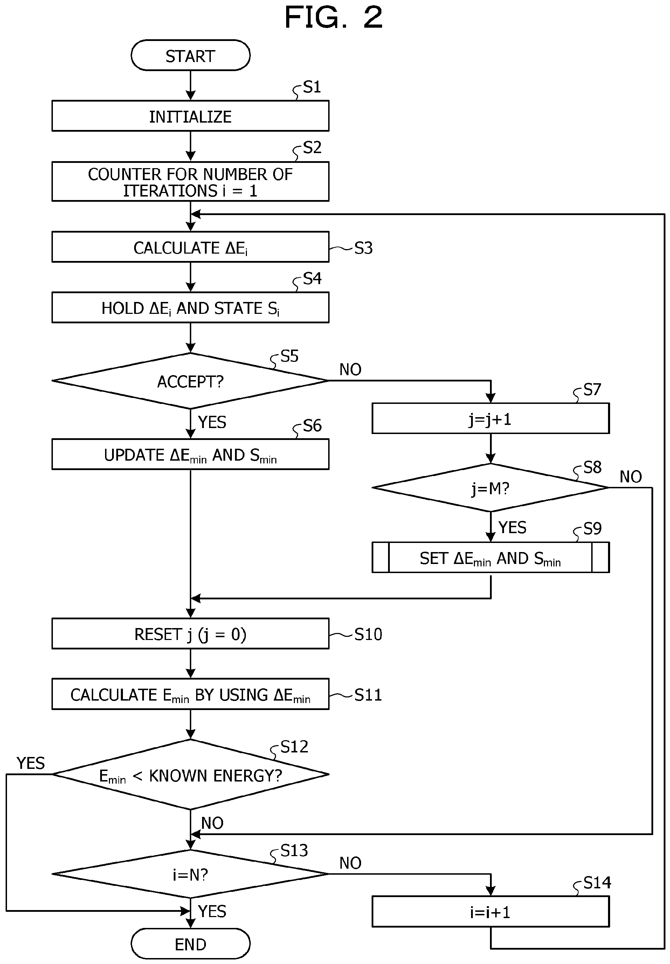

FIG. 2 is a flowchart illustrating an example of an operation of the optimization apparatus 1 according to the embodiment. As illustrated in FIG. 2, in response to the start of processing, the initial state setting unit 51 initializes a condition used when the optimum solution of the Ising-type energy function corresponding to the optimization problem is obtained through the simulated annealing processing (S1).

For example, the initial state setting unit 51 receives the information on the initial state via the communication unit 10 or the input unit 20, and sets the initial state of the simulated annealing processing. The setting of the initial state includes, in addition to initial setting of the Ising-type energy function and each variable (bit) in that function, setting of the initial temperature of thermal noise, setting of the number of iterations (N), setting of the threshold (M) of the number of consecutive rejections, and initialization (j = 0) of the counter (j) for counting the number of consecutive rejections. The setting of the initial state also includes setting of the number of candidate states (K) that serve as candidates for the transition destination, setting of the threshold (TH) for determining the candidate state, and so on.

Then, the calculation control unit 54 sets a counter (i) of the number of iterations to i = 1 (S2), and starts the simulated annealing processing (S3 to S14).

For example, the energy calculation unit 52 randomly or sequentially selects a variable (bit) from the current state ($S_{min}$), and calculates the energy increase ($\Delta E_i$) caused when the value of the selected variable is changed (when the bit is inverted) in accordance with Equation (2) (S3). In a case where the iteration counter is i = 1, the current state ($S_{min}$) is the state of the initial setting made in the S1.

Then, the state holding unit 53 causes the storage unit 40 to hold, as the state information 42, the energy increase ($\Delta E_i$) calculated by the energy calculation unit 52 and the state ($S_i$) in which the value of the variable is changed (S4).

Then, based on the energy increase ($\Delta E_i$) calculated by the energy calculation unit 52, the calculation control unit 54 determines whether to accept, as the transition destination, the state ($S_i$) in which the value of the variable is changed (S5).

For example, the calculation control unit 54 calculates an acceptance probability ($A(\Delta E_i)$) of the state transition, based on the energy increase ($\Delta E_i$), and determines acceptance or rejection in accordance with whether that probability is equal to or greater than a predetermined value. The calculation control unit 54 may determine acceptance or rejection by using a difference between a uniform random number u[i] and the acceptance probability ($A(\Delta E_i)$) of the state transition.

If the state ($S_i$) is accepted as the transition destination (S5: Yes), the calculation control unit 54 updates the current state ($S_{min}$) and the energy increase ($\Delta E_{min}$) corresponding to that state (S6). The processing then proceeds to S10. For example, the calculation control unit 54 replaces $\Delta E_{min}$ with the energy increase ($\Delta E_i$) calculated by the energy calculation unit 52. The calculation control unit 54 also sets the state ($S_i$) in which the value of the variable is changed, as the new current state ($S_{min}$).

If the state ($S_i$) is not accepted as the transition destination (S5: No), the calculation control unit 54 increments the counter (j) for counting the number of consecutive rejections (j = j + 1) (S7).

Then, the calculation control unit 54 determines whether the counter (j) for counting the number of consecutive rejections is equal to the threshold (M) of the number of consecutive rejections (j = M?) (S8). If the counter (j) for counting the number of consecutive rejections is not equal to the threshold (M) of the number of consecutive rejections (S8: No), the calculation control unit 54 causes the processing to proceed to S13.

If the counter (j) for counting the number of consecutive rejections is equal to the threshold (M) for the number of consecutive rejections (S8: Yes), the calculation control unit 54 performs setting processing for setting the state ($S_{min}$) that serves as the transition destination and the energy increase ($\Delta E_{min}$) corresponding to that state (S9). The processing then proceeds to S10.

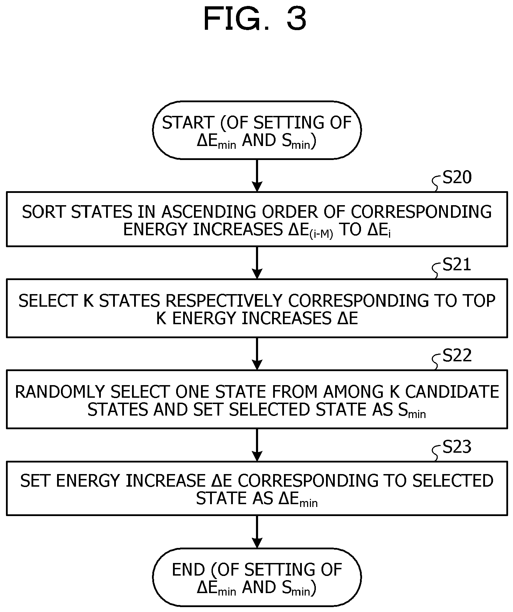

FIG. 3 is a flowchart illustrating an example of the setting processing. As illustrated in FIG. 3, in response to the start of the setting processing (for setting $\Delta E_{min}$ and $S_{min}$), the calculation control unit 54 sorts the states ($S_i$) included in the state information 42 in ascending order of the corresponding energy increases ($\Delta E_i$) (S20). For example, in a case where acceptance of M state transitions has not occurred even once, the states corresponding to the respective energy increases $\Delta E_{(i-M)}$ to $\Delta E_i$ in the state information 42 are sorted in ascending order.

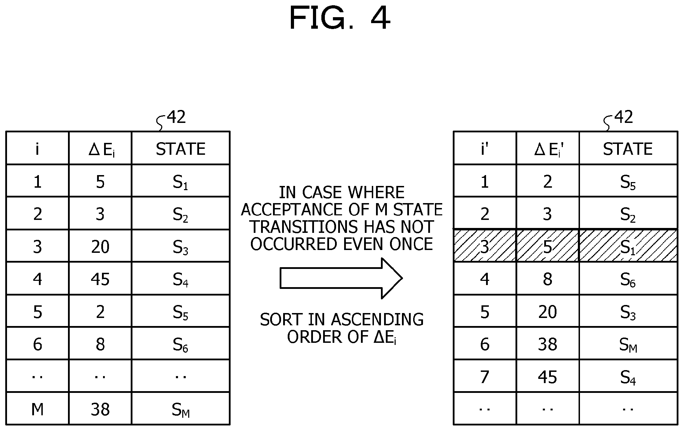

FIG. 4 is an explanatory diagram for describing selection of a state that serves as the transition destination. FIG. 4 illustrates the state information 42 in a case where acceptance of M state transitions has not occurred even once. As illustrated in FIG. 4, the state information 42 includes M energy increases $\Delta E_i$ and states $S_i$ corresponding those energy increases $\Delta E_i$. The calculation control unit 54 sorts this state information 42 in ascending order based on the energy increases ($\Delta E_i$) (see the right side in FIG. 4).

Then, the calculation control unit 54 selects, as candidate states, K states respectively corresponding to top K energy increases $\Delta E$ after the sorting (S21). Then, the calculation control unit 54 randomly selects one of the K selected candidate states and sets the selected candidate state as a new state ($S_{min}$) that serves as the transition destination (S22). Then, the calculation control unit 54 sets the energy increase $\Delta E$ corresponding to the selected state as $\Delta E_{min}$ (S23).

For example, in the example illustrated in FIG. 4, the calculation control unit 54 selects the top seven states from among the M states, and sets one state ($S_1$) among those top seven states as the new state ($S_{min}$) that serves as the transition destination. The calculation control unit 54 sets an energy increase $\Delta E'_i$ corresponding to the selected state ($S_1$) as $\Delta E_{min}$.

Referring back to FIG. 2, after the processing of S6 or S9, the calculation control unit 54 resets the counter (j) for counting the number of consecutive rejections (j = 0) (S10). Then, based on Equation (1) described above, the energy calculation unit 52 calculates the current energy $E_{min}$ of the entire system by using $\Delta E_{min}$ (S11).

Then, the calculation control unit 54 determines whether the energy $E_{min}$ of the entire system calculated by the energy calculation unit 52 satisfies a predetermined condition ($E_{min}$ < known energy) (S12). The known energy is a known energy value that is the minimum in the evaluation function (energy function), and is set together with the energy function at the time of initial setting or the like, for example.

If the condition is satisfied (S12: Yes), the calculation control unit 54 sets the current state ($S_i$) obtained through the simulated annealing processing (S3 to S14), as the state that serves as the solution. The processing then ends.

If the condition is not satisfied (S12: No), the calculation control unit 54 determines whether the counter (i) of the number of iterations is equal to the number of iterations (N) set as the initial condition (i = N?) (S13). If the counter (i) is equal to the number of iterations (N) (S13: Yes), the calculation control unit 54 sets the current state ($S_i$) as the state that serves as the solution. The processing then ends.

If the counter (i) is not equal to the number of iterations (N) (S13: No), the calculation control unit 54 increments the counter (i) for counting the number of iterations (i = i + 1) (S14). The processing then returns to S3.

In the setting processing for setting the state ($S_{min}$) that serves as the transition destination and the energy increase ($\Delta E_{min}$) corresponding to that state in S9, the calculation control unit 54 may select and set one state from among the candidate states included in the transition candidate information 43.

For example, in the S4, the state holding unit 53 stores each energy difference and the value of each variable indicating the corresponding state (candidate state) in the case where the energy difference ($\Delta E_i$) is smaller than the specific value (threshold (TH)), in the storage unit 40 as the transition candidate information 43. The calculation control unit 54 randomly selects one of the candidate states included in this transition candidate information 43 and sets the selected candidate state as the new state ($S_{min}$) that serves as the transition destination (S22). Then, the calculation control unit 54 sets the energy increase $\Delta E$ corresponding to the selected state as $\Delta E_{min}$ (S23).

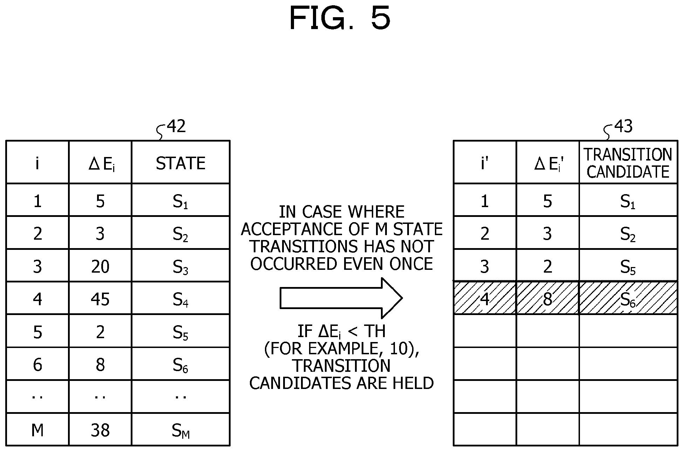

FIG. 5 is an explanatory diagram for describing selection of a state that serves as the transition destination. On the left side in FIG. 5, the state information 42 in a case where acceptance of M state transitions has not occurred even once is illustrated. As illustrated in FIG. 5, when the threshold (TH) is set to 10, states ($S_1$, $S_2$, $S_5$, and $S_6$ in the illustrated example) in which the energy increase $\Delta E_i$ is less than 10 are held in the transition candidate information 43 as the candidate states. The calculation control unit 54 randomly selects one state ($S_6$ in the illustrated example) from among these candidate states (Si, $S_2$, $S_5$, and $S_6$), and sets the selected state as the new state ($S_{min}$) that serves as the transition destination.

In S4, the state holding unit 53 may store information on a specific number of candidate states in the storage unit 40 as the transition candidate information 43. For example, in a case where three candidate states are held as the transition candidate information 43, the state holding unit 53 stores the energy difference and the value of each variable indicating the corresponding state (candidate state) in the case where the energy difference is smaller than the specific value (threshold (TH)) up to the third candidate state, in the storage unit 40 as the transition candidate information 43. Then, in a case where three candidate states are held, the state holding unit 53 updates one of the three candidate states with the latest information (the energy difference and the value of each variable indicating that state (candidate state)). For example, the state holding unit 53 updates the oldest information among the three candidate states, with the latest information.

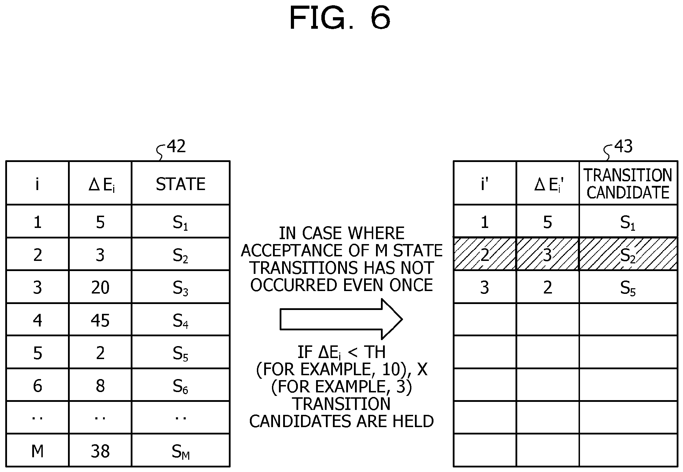

FIG. 6 is an explanatory diagram for describing selection of a state that serves as the transition destination. As illustrated in FIG. 6, the state holding unit 53 stores information on X (three in the illustrated example) candidate states (Si, $S_2$, and $S_5$, and the corresponding energy increases $\Delta E'_i$ thereof) in the storage unit 40 as the transition candidate information 43. The calculation control unit 54 randomly selects one state ($S_2$ in the illustrated example) from among these candidate states (Si, $S_2$, and $S_5$) and sets the selected state as the new state ($S_{min}$) that serves as the transition destination.

As described above, the optimization apparatus 1 searches for a state that serves as a solution through iteration of processing in which, based on a difference ($\Delta E_i$) between an energy value of an evaluation function based on values of respective variables that indicate a current state and an energy value of the evaluation function based on values of the variables that indicate a state ($S_i$) in which a value of at least one variable among the variables is changed, whether to accept a state transition is determined and the state transition is made. In this search, the optimization apparatus 1 stores, as the state information 42, the difference ($\Delta E_i$) between the energy in the current state and the energy in the changed state and the values of the respective variables that indicate the changed state ($S_i$). The optimization apparatus 1 selects, based on the energy difference, one state from among the states included in the stored state information 42 in a case where negation of the state transition is consecutively iterated a specific number of times. Then, the optimization apparatus 1 makes the state transition from the current state to the selected one state.

Thus, the optimization apparatus 1 may avoid a circumstance in which, when a search for a state that serves as the solution is performed, a state change does not occur and the search stays at a local solution for a long time. Because this leads to a reduction in processing time for obtaining the optimum solution, the search for the solution may be performed efficiently.

The optimization apparatus 1 selects the one state from a top specific number of the states obtained in a case where the respective energy differences ($\Delta E_i$) are sorted in ascending order. For the state ($S_i$) changed from the current state, as the energy difference ($\Delta E_i$) becomes smaller, the acceptance probability of the state transition becomes higher. Thus, it may be said that the state is appropriate as the transition destination. Thus, the optimization apparatus 1 may select a state that is more appropriate as the transition destination by sorting the states in ascending order of the energy differences ($\Delta E_i$) and selecting one state from among the top specific number of states.

The optimization apparatus 1 stores, as the transition candidate information 43, the energy difference ($\Delta E_i$) and values of the respective variables that indicate the corresponding state (candidate state) in a case where the energy difference is smaller than a specific value (threshold (TH)). The optimization apparatus 1 selects one state from among the candidate states included in stored transition candidate information 43. Thus, the optimization apparatus 1 may select one state from among states that are narrowed down in advance and of which the energy difference ($\Delta E_i$) is smaller than the specific value.

The optimization apparatus 1 updates one of the specific number of candidate states in the stored transition candidate information 43, with a new candidate state. Thus, the optimization apparatus 1 may avoid an increase in memory usage by making the number of candidate states in the transition candidate information 43 not exceed the specific number.

The optimization apparatus 1 calculates an energy value in the state to which the state transition is made. The optimization apparatus 1 sets the state to which the state transition is made, as the state that serves as the solution in a case where the calculated energy value satisfies a specific condition. Thus, the optimization apparatus 1 may obtain, as the solution, the state of which the energy value of the evaluation function satisfies the specific condition. For example, in a case where a maximum or minimum energy value is known for the energy value of the evaluation function, the optimization apparatus 1 may obtain, as the solution, a state having that energy value.

Note that each component of each apparatus illustrated in the drawings is not necessarily configured physically as illustrated in the drawings. For example, specific forms of distribution and integration in each apparatus are not limited to those illustrated in the drawings. The entirety or part of the apparatus may be configured by being functionally or physically distributed or integrated in arbitrary units in accordance with various loads, usage situations, and the like.

All or arbitrary some of various processing functions of the initial state setting unit 51, the energy calculation unit 52, the state holding unit 53, and the calculation control unit 54 carried out in the control unit 50 of the optimization apparatus 1 may be executed with a CPU (or a microcomputer such as a micro-processor unit (MPU) or a micro-controller unit (MCU)). Needless to say, all of or arbitrary some of the various processing functions may be executed with a program analyzed and executed by the CPU (or a microcomputer such as an MPU or an MCU) or with hardware of wired logic. The various processing functions carried out in the optimization apparatus 1 may be executed in such a manner that a plurality of computers cooperate with each other via cloud computing.

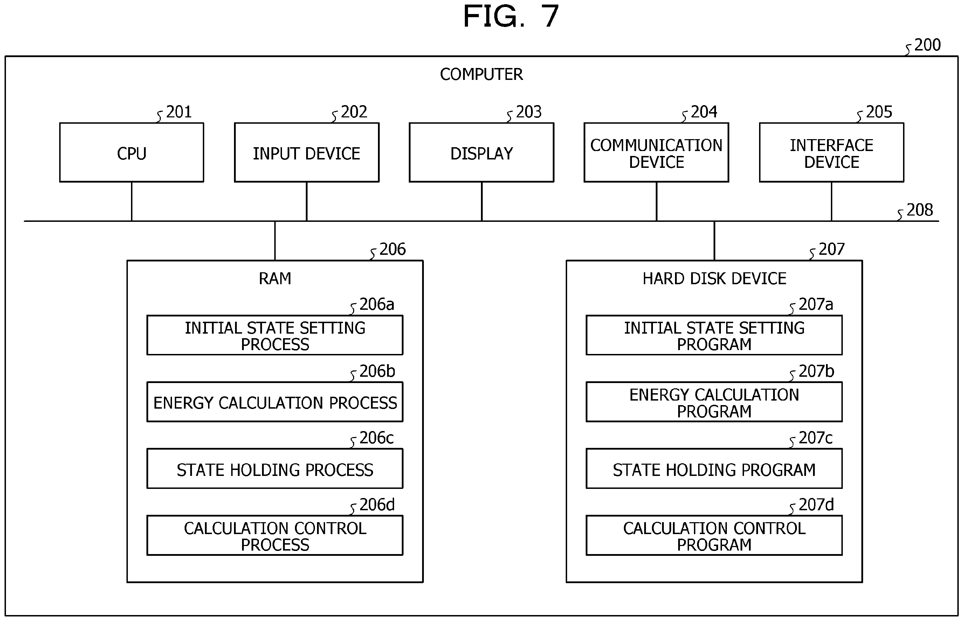

The various kinds of processing described in the embodiment described above may be implemented by execution of a program prepared in advance by a computer. Accordingly, an example of a (hardware) configuration of the computer that executes the program having substantially the same functions as those of the embodiment described above will be described below. FIG. 7 is an explanatory diagram for describing an example of the configuration of the computer.

As illustrated in FIG. 7, a computer 200 includes a CPU 201 that executes various kinds of arithmetic processing, an input device 202 that receives an input of data from a user, and a display 203. The computer 200 also includes a communication device 204 that receives data from an external apparatus, and an interface device 205 that is coupled to various apparatuses. The computer 200 includes a RAM 206 that temporarily stores various kinds of information, and a hard disk device 207. Each of the CPU 201 to the hard disk device 207 is coupled to a bus 208.

The hard disk device 207 includes an initial state setting program 207a, an energy calculation program 207b, a state holding program 207c, and a calculation control program 207d. The CPU 201 reads the initial state setting program 207a, the energy calculation program 207b, the state holding program 207c, and the calculation control program 207d and loads the initial state setting program 207a, the energy calculation program 207b, the state holding program 207c, and the calculation control program 207d to the RAM 206.

The initial state setting program 207a functions as an initial state setting process 206a. The energy calculation program 207b functions as an energy calculation process 206b. The state holding program 207c functions as a state holding process 206c. The calculation control program 207d functions as a calculation control process 206d.

Processing of the initial state setting process 206a corresponds to the processing of the initial state setting unit 51. Processing of the energy calculation process 206b corresponds to the processing of the energy calculation unit 52. Processing of the state holding process 206c corresponds to the processing of the state holding unit 53. Processing of the calculation control process 206d corresponds to the processing of the calculation control unit 54.

Each program among the initial state setting program 207a, the energy calculation program 207b, the state holding program 207c, and the calculation control program 207d is not necessarily stored in the hard disk device 207 initially. For example, each program may be stored on a "portable physical medium" such as a flexible disk (FD), a compact disc read-only memory (CD-ROM), a digital versatile disc (DVD), a magneto-optical disk, or an integrated circuit (IC) card to be inserted into the computer 200. The computer 200 may then read and execute each program. Alternatively, each program may be stored in an apparatus coupled to a public network, the Internet, a LAN, or the like, and the computer 200 may read each program from the apparatus and execute the program.

In relation to the embodiment above, the following appendices are further disclosed.

**Claims**

1.  An optimization program comprising instructions which, when executed by a computer, cause the computer to execute optimization processing comprising:

    performing a search for a state that serves as a solution through iteration of processing, the processing being configured to determine, by using a difference between a first energy value of an evaluation function based on respective values of a plurality of variables that indicate a first state and a second energy value of the evaluation function based on respective values of the plurality of variables that indicate a second state in which a value of at least one variable among the plurality of variables is changed, whether to accept a state transition from the first state to the second state, and perform the state transition based on a result of the determining; and
    in the performing of the search for the state,
    storing the difference between the first energy value in the first state and the second energy value in the second state, and the respective values of the plurality of variables that indicate the second state;
    in a case where negation of the state transition is consecutively iterated a specific number of times, selecting one state from among the stored second states, based on the differences, and
    making the state transition from the first state to the selected one state.

2.  The optimization program according to claim 1, wherein
    the selecting is configured to select the one state from among a top specific number of the second states obtained in a case where the respective differences are sorted in ascending order.

3.  The optimization program according to claim 1, wherein

    the storing is configured to store, as a candidate state, the difference and the respective values of the plurality of variables that indicate the second state in a case where the difference is smaller than a specific value, and
    the selecting is configured to select the one state from among the stored candidate states.

4.  The optimization program according to claim 3, wherein
    the storing is configured to update one of a stored specific number of the candidate states with a new candidate state.

5.  The optimization program according to any one of claims 1 to 4, the optimization processing further comprising:

    calculating a third energy value in the one state to which the state transition is made; and
    in a case where the calculated third energy value satisfies a specific condition, setting the one state to which the state transition is made, as the state that serves as the solution.

6.  A computer-implemented method of an optimization processing, the method comprising:

    performing a search for a state that serves as a solution through iteration of processing, the processing being configured to determine, by using a difference between a first energy value of an evaluation function based on respective values of a plurality of variables that indicate a first state and a second energy value of the evaluation function based on respective values of the plurality of variables that indicate a second state in which a value of at least one variable among the plurality of variables is changed, whether to accept a state transition from the first state to the second state, and perform the state transition based on a result of the determining; and
    in the performing of the search for the state,
    storing the difference between the first energy value in the first state and the second energy value in the second state, and the respective values of the plurality of variables that indicate the second state,
    in a case where negation of the state transition is consecutively iterated a specific number of times, selecting one state from among the stored second states, based on the differences, and

making the state transition from the first state to the selected one state.

7. An optimization apparatus comprising:

a memory; and
a processor coupled to the memory, the processor being configured to perform optimization processing including:

performing a search for a state that serves as a solution through iteration of processing, the processing being configured to determine, by using a difference between a first energy value of an evaluation function based on respective values of a plurality of variables that indicate a first state and a second energy value of the evaluation function based on respective values of the plurality of variables that indicate a second state in which a value of at least one variable among the plurality of variables is changed, whether to accept a state transition from the first state to the second state, and perform the state transition based on a result of the determining; and
in the performing of the search for the state,
storing the difference between the first energy value in the first state and the second energy value in the second state, and the respective values of the plurality of variables that indicate the second state,
in a case where negation of the state transition is consecutively iterated a specific number of times, selecting one state from among the stored second states, based on the differences, and
making the state transition from the first state to the selected one state.

# FIG. 1

OPTIMIZATION APPARATUS ⌐1

CONTROL UNIT ⌐50

STORAGE UNIT ⌐40

COMMUNICATION UNIT ⌐10

INITIAL STATE SETTING UNIT ⌐51

INITIAL SETTING INFORMATION ⌐41

INPUT UNIT ⌐20

ENERGY CALCULATION UNIT ⌐52

STATE INFORMATION ⌐42

DISPLAY UNIT ⌐30

STATE HOLDING UNIT ⌐53

TRANSITION CANDIDATE INFORMATION ⌐43

CALCULATION CONTROL UNIT ⌐54

# FIG. 2

START

INITIALIZE — S1

COUNTER FOR NUMBER OF ITERATIONS i = 1 — S2

CALCULATE $\Delta E_i$ — S3

HOLD $\Delta E_i$ AND STATE $S_i$ — S4

ACCEPT? — S5

NO

YES

UPDATE $\Delta E_{min}$ AND $S_{min}$ — S6

j=j+1 — S7

j=M? — S8

NO

YES

SET $\Delta E_{min}$ AND $S_{min}$ — S9

RESET j (j = 0) — S10

CALCULATE $E_{min}$ BY USING $\Delta E_{min}$ — S11

$E_{min}$ < KNOWN ENERGY? — S12

YES

NO

i=N? — S13

NO

YES

i=i+1 — S14

END

# FIG. 3

START (OF SETTING OF $\Delta E_{min}$ AND $S_{min}$)

↓

$\curvearrowright$S20

SORT STATES IN ASCENDING ORDER OF CORRESPONDING ENERGY INCREASES $\Delta E_{(i-M)}$ TO $\Delta E_i$

↓

$\curvearrowright$S21

SELECT K STATES RESPECTIVELY CORRESPONDING TO TOP K ENERGY INCREASES $\Delta E$

↓

$\curvearrowright$S22

RANDOMLY SELECT ONE STATE FROM AMONG K CANDIDATE STATES AND SET SELECTED STATE AS $S_{min}$

↓

$\curvearrowright$S23

SET ENERGY INCREASE $\Delta E$ CORRESPONDING TO SELECTED STATE AS $\Delta E_{min}$

↓

END (OF SETTING OF $\Delta E_{min}$ AND $S_{min}$)

# FIG. 4

| i | $\Delta E_i$ | STATE |
|---|---|---|
| 1 | 5 | $S_1$ |
| 2 | 3 | $S_2$ |
| 3 | 20 | $S_3$ |
| 4 | 45 | $S_4$ |
| 5 | 2 | $S_5$ |
| 6 | 8 | $S_6$ |
| .. | .. | .. |
| M | 38 | $S_M$ |

IN CASE WHERE ACCEPTANCE OF M STATE TRANSITIONS HAS NOT OCCURRED EVEN ONCE

SORT IN ASCENDING ORDER OF $\Delta E_i$

| i' | $\Delta E_i'$ | STATE |
|---|---|---|
| 1 | 2 | $S_5$ |
| 2 | 3 | $S_2$ |
| 3 | 5 | $S_1$ |
| 4 | 8 | $S_6$ |
| 5 | 20 | $S_3$ |
| 6 | 38 | $S_M$ |
| 7 | 45 | $S_4$ |
| .. | .. | .. |

# FIG. 5

42

| i | $\Delta E_i$ | STATE |
|---|---|---|
| 1 | 5 | $S_1$ |
| 2 | 3 | $S_2$ |
| 3 | 20 | $S_3$ |
| 4 | 45 | $S_4$ |
| 5 | 2 | $S_5$ |
| 6 | 8 | $S_6$ |
| .. | .. | .. |
| M | 38 | $S_M$ |

IN CASE WHERE
ACCEPTANCE OF M STATE
TRANSITIONS HAS NOT
OCCURRED EVEN ONCE

$\Longrightarrow$

IF $\Delta E_i$ < TH
(FOR EXAMPLE, 10),
TRANSITION
CANDIDATES ARE HELD

43

| i' | $\Delta E_i'$ | TRANSITION CANDIDATE |
|---|---|---|
| 1 | 5 | $S_1$ |
| 2 | 3 | $S_2$ |
| 3 | 2 | $S_5$ |
| 4 | 8 | $S_6$ |
| | | |
| | | |
| | | |
| | | |

# FIG. 6

42

| i | $\Delta E_i$ | STATE |
|---|---|---|
| 1 | 5 | $S_1$ |
| 2 | 3 | $S_2$ |
| 3 | 20 | $S_3$ |
| 4 | 45 | $S_4$ |
| 5 | 2 | $S_5$ |
| 6 | 8 | $S_6$ |
| .. | .. | .. |
| M | 38 | $S_M$ |

IN CASE WHERE
ACCEPTANCE OF M STATE
TRANSITIONS HAS NOT
OCCURRED EVEN ONCE

⇒

IF $\Delta E_i$ < TH
(FOR EXAMPLE, 10), X
(FOR EXAMPLE, 3)
TRANSITION
CANDIDATES ARE HELD

43

| i' | $\Delta E_i'$ | TRANSITION CANDIDATE |
|---|---|---|
| 1 | 5 | $S_1$ |
| 2 | 3 | $S_2$ |
| 3 | 2 | $S_5$ |
| | | |
| | | |
| | | |
| | | |
| | | |

# FIG. 7

COMPUTER 200

- CPU 201
- INPUT DEVICE 202
- DISPLAY 203
- COMMUNICATION DEVICE 204
- INTERFACE DEVICE 205

208

**RAM 206**
- INITIAL STATE SETTING PROCESS 206a
- ENERGY CALCULATION PROCESS 206b
- STATE HOLDING PROCESS 206c
- CALCULATION CONTROL PROCESS 206d

**HARD DISK DEVICE 207**
- INITIAL STATE SETTING PROGRAM 207a
- ENERGY CALCULATION PROGRAM 207b
- STATE HOLDING PROGRAM 207c
- CALCULATION CONTROL PROGRAM 207d

EP 4 160 489 A1

# FIG. 8

# FIG. 9

# FIG. 10

```
        ┌──────────────────────────────┐
        │                              │
        │              ↓   ⌇S101       │
        │   ┌──────────────────────┐   │
        │   │    SELECT BIT (i)     │   │
        │   └──────────────────────┘   │
        │              ↓   ⌇S102       │
        │   ┌──────────────────────┐   │
        │   │    CALCULATE ΔEᵢ      │   │
        │   └──────────────────────┘   │
        │              ↓   ⌇S103       │
        │           ╱        ╲         │
   NO   ←─────────┤   ACCEPT?   ├      │
        │           ╲        ╱         │
        │              ↓ YES  ⌇S104    │
        │   ┌──────────────────────┐   │
        │   │       UPDATE         │   │
        │   └──────────────────────┘   │
        │              │               │
        └──────────────┘               
```

$S101$ SELECT BIT (i)

$S102$ CALCULATE $\Delta E_i$

$S103$ ACCEPT? — NO / YES

$S104$ UPDATE

| | Europäisches Patentamt<br>European Patent Office<br>Office européen des brevets | **EUROPEAN SEARCH REPORT** | **Application Number**<br>EP 22 17 4822 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HEMANT KUMAR SINGH ET AL: "Surrogate assisted Simulated Annealing (SASA) for constrained multi-objective optimization", EVOLUTIONARY COMPUTATION (CEC), 2010 IEEE CONGRESS ON, IEEE, PISCATAWAY, NJ, USA, 18 July 2010 (2010-07-18), pages 1-8, XP031763609, ISBN: 978-1-4244-6909-3 * section II.C; algorithms 1 and 2 * | 1-7 | INV.<br>G06N5/00<br>G06N7/00<br><br>ADD.<br>G06N3/04 |
| X | AGUIRRE H ET AL: "RANDOM BIT CLIMBERS ON MULTIOBJECTIVE MNK-LANDSCAPES: EFFECTS OF MEMORY AND POPULATION CLIMBING", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E88-A, no. 1, 1 January 2005 (2005-01-01), pages 334-345, XP001221199, ISSN: 0916-8508, DOI: 10.1093/IETFEC/E88-A.1.334 * sections 3.3 and 3.4; figure 2; table 1 * | 1-7 | |
| | | | TECHNICAL FIELDS SEARCHED (IPC)<br><br>G06N |
| A | LOURENCO H R ET AL: "Iterated Local Search", ARXIV.ORG, CORNELL UNIVERSITY LIBRARY, 201 OLIN LIBRARY CORNELL UNIVERSITY ITHACA, NY 14853, 23 February 2001 (2001-02-23), XP080042746, * sections 2 and 3.3 * | 1-7 | |

-/--

The present search report has been drawn up for all claims

| Place of search | Date of completion of the search | Examiner |
|---|---|---|
| The Hague | 20 November 2022 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches Patentamt

European Patent Office

Office européen des brevets

# EUROPEAN SEARCH REPORT

Application Number

EP 22 17 4822

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DAVID YEVICK ET AL: "Transition Matrix Cluster Algorithms", ARXIV.ORG, CORNELL UNIVERSITY LIBRARY, 201 OLIN LIBRARY CORNELL UNIVERSITY ITHACA, NY 14853, 29 March 2018 (2018-03-29), XP081144394, DOI: 10.1142/S0129183119500049 * the whole document * | 1-7 | |

TECHNICAL FIELDS SEARCHED (IPC)

The present search report has been drawn up for all claims

| Place of search | Date of completion of the search | Examiner |
|---|---|---|
| The Hague | 20 November 2022 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10293756 A
- JP 9034951 A
- JP 6019507 A
- JP 2020079991 A